# DEMANDE DE BREVET EUROPEEN

(11) **EP 1 714 872 A1**
(43) Date de publication de la demande: **25.10.2006**
(21) Numéro de dépôt: 06368008.6
(22) Date de dépôt: 19.04.2006
(51) Int. Cl.: B64D 47/08

(54) **Système pour la prise d'images aériennes**

(30) Priorité: 20.04.2005 FR 0503940
(71) Demandeur: Margossian, Megerditch, 06160 Juan Les Pins (FR)
(72) Inventeur: Margossian, Megerditch, 06160 Juan Les Pins (FR)
(74) Mandataire: Macquet, Christophe

(57) **Abrégé**

L'invention concerne un système pour la prise d'images aériennes comprenant un aérostat (1) captif formé d'un ballon (2) et comportant un dispositif (4) de prise d'images télécommandé à distance par un opérateur (8) au sol. Le système selon l'invention est caractérisé en ce que ledit aérostat (1) comporte en outre une queue (5) apte à maintenir l'aérostat (1) sensiblement dans une direction donnée par rapport à la direction du vent.

## Description

L'invention concerne un système pour la prise d'images aériennes et, plus particulièrement, un tel système comprenant un aérostat captif formé d'un ballon et comportant un dispositif de prise d'images radio-télécommandé à distance par un opérateur au sol.

Pour la prise d'images aériennes à basse altitude, on utilise avantageusement des aérostats captifs.

Dans la plupart des cas, ces aérostats sont des zeppelins de 5 à 7 m de long, gonflés à l'hélium. L'appareil de prise de vues, en pratique un appareil photographique, est maintenu dans une nacelle accrochée au zeppelin par un système de cordages et de poulies. Le zeppelin est lui-même retenu par un câble actionné par un treuil manuel posé au sol. L'appareil photo est contrôlé à distance depuis une télécommande manoeuvrée par un opérateur.

Toutefois, l'utilisation de zeppelins pour la prise d'images aériennes présente de multiples inconvénients. Tout d'abord, la quantité d'hélium contenue dans un zeppelin est considérable. Etant donné qu'un zeppelin perd, chaque jour, de 1 à 8 % de son volume d'hélium, les coûts fixes associés au gonflage du zeppelin sont substantiels. D'autre part, le transport d'un zeppelin nécessite une remorque d'environ 7 m de long. Il n'est ainsi pas possible de conduire un zeppelin dans des endroits difficiles d'accès, où les routes sont étroites. Ensuite, la nacelle d'un zeppelin n'est absolument pas stabilisée. Elle bouge avec le vent, oscille, ce qui diminue la qualité des images acquises. Par ailleurs, la manipulation du treuil est laborieuse. En effet, ce treuil est généralement volumineux et lourd de sorte qu'il ne peut être porté par l'opérateur. De surcroît, il n'autorise pas de descentes et de montées rapides du zeppelin. Enfin, il n'est pas possible de maîtriser la direction du zeppelin qui s'oriente toujours dans la direction du vent.

On connaît cependant un système d'aérostat plus pratique. Ce système est décrit dans la demande de brevet en France publiée sous le numéro FR-2 828 868. Il s'agit d'un système d'aérostat captif comprenant un aérostat du type ballon et une console de commande portée par un opérateur au sol. Le ballon a un diamètre d'environ 2 m 50 et l'aérostat est relié à la console de commande par deux amarres. De ce fait, la console est munie de deux treuils indépendants.

Cependant, l'aérostat tel que décrit dans ce document n'est pas stable, aérodynamiquement. Le poids des amarres est important. Leur résistance aérodynamique est de même importante. Elles sont donc à l'origine de forces qui tendent à faire descendre l'aérostat. En outre, les deux amarres n'empêcheraient pas le ballon de tourner sur lui-même, dans toutes les conditions de vent et le système d'aérostat serait susceptible de vriller. Enfin, ce système, bien que portable, est lourd et de manipulation difficile en raison de la présence de deux treuils et de la console.

Compte tenu de ce qui précède, un problème que se propose de résoudre l'invention est de fournir un système pour la prise d'images aériennes comprenant un aérostat captif formé d'un ballon et comportant un dispositif de prise d'images télécommandé à distance par un opérateur au sol, qui présente un stabilité importante sans pour autant présenter les inconvénients liés aux larges dimensions des zeppelins.

La solution de l'invention à ce problème posé a pour objet un système pour la prise d'images aériennes comprenant un aérostat captif formé d'un ballon et comportant un dispositif de prise d'images télécommandé à distance par un opérateur au sol, caractérisé en ce que ledit aérostat comporte en outre une queue apte à maintenir l'aérostat sensiblement dans une direction donnée par rapport à la direction du vent.

De manière avantageuse - l'aérostat comporte une plate-forme de portage apte à porter le dispositif de prise d'images; - la plate-forme de portage comporte un logement pour l'embout de gonflage du ballon; - le dispositif de prise d'images comprend une partie mobile en rotation autour d'un axe sensiblement vertical et un appareil de prise d'images ; - l'appareil de prise d'images est porté par un support mobile en rotation autour d'un axe sensiblement horizontal ; - la queue est reliée à la plate-forme de portage par un élément de liaison ; - l'élément de liaison est mobile en rotation autour d'un axe sensiblement horizontal ; - la queue est une queue droite ou une queue oblique ou une queue motorisée ; - un treuil motorisé pour l'enroulement et le déroulement du fil de retenue, ledit treuil étant portatif ; et - le treuil comporte un support muni de sangles sur lequel support sont fixés des moyens moteurs, des moyens mobiles d'enroulement et des moyens formant freins.

L'invention sera mieux comprise à la lecture de la description non limitative qui suit, rédigée au regard des dessins annexés, dans lesquels :
- la figure 1 présente le système selon l'invention ;
- la figure 2 montre, en vue de dessus, la plate-forme de portage du système selon l'invention ;
- la figure 3 montre, en vue de face, le dispositif de prise d'images du système selon l'invention ;
- les figures 4A et 4B montrent, en perspective, deux variantes de réalisation d'une queue de stabilisation d'un système selon l'invention ;
- la figure 5 illustre, de manière schématique, les avantages de la présence d'une aile additionnelle au système selon l'invention ; et
- les figures 6A et 6B montrent, respectivement en vue de profil et en vue de face, le treuil d'un système selon l'invention.

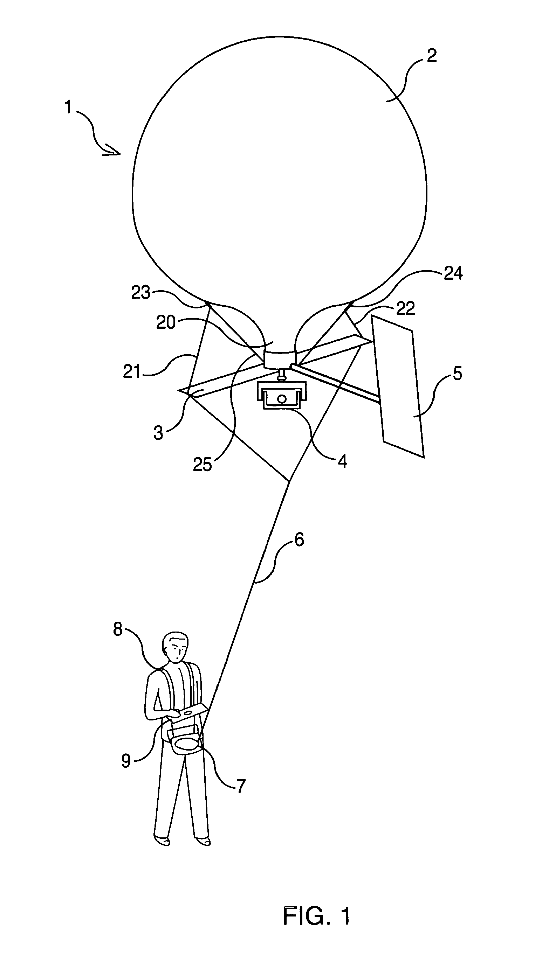

Ainsi que cela est montré à la figure 1, le système selon l'invention comprend un aérostat captif 1.

Cet aérostat 1 comprend un ballon 2, une plate-forme de portage 3, un dispositif de prise d'images 4 et une queue 5.

Le ballon 2 est sensiblement sphérique et présente, à son extrémité inférieure, un embout 20 de gonflage. Il possède une enveloppe plastique élastique et est gonflé par de l'hélium ou par tout autre gaz plus léger que l'air. Les dimensions du ballon 2 sont faibles pour un aérostat destiné à la prise d'images aériennes. En effet, le ballon a généralement un diamètre inférieur à 2 m, en pratique égal à 1,75 m. Ainsi, il peut être transporté à moindres coûts, dans une remorque de 2 mètres de long et de large environ. De plus, les charges fixes de maintien du gonflage du ballon sont réduites de moitié, en comparaison des charges correspondantes d'un zeppelin.

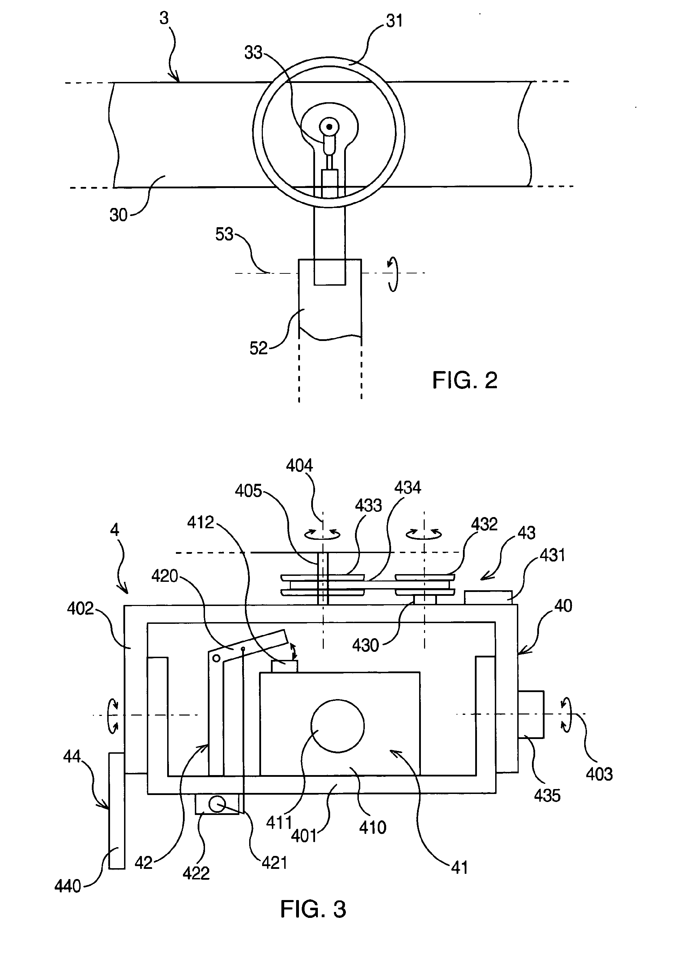

La plate-forme de portage 3 est plus particulièrement montrée à la figure 2. Elle présente un profilé 30 et, positionné au centre dudit profilé 30, un logement 31. Les fonctions de la plate-forme 3 sont les suivantes : former un lien entre le ballon 2 et le dispositif 4 de prise d'images, amortir les vibrations ou oscillations et permettre l'accrochage des différentes queues ou ailes destinées à orienter l'aérostat.

La longueur du profilé 30 est de l'ordre de 70 cm et sa largeur (en pratique sa corde, car le profilé forme une lame légèrement incurvée) est de l'ordre de 10 cm. Il est constitué d'un matériau léger, par exemple de polystyrène extrudé, de fibres de verre, d'aluminium et de contre-plaqué, de fibres de carbone éventuellement moyée dans de la résine époxy ou de balsa. Il présente en son centre, une ouverture oblongue non représentée sur les figures.

Le logement 31 reçoit l'embout 20 de gonflage du ballon 2. Il se présente sous la forme d'un cylindre ouvert dont le diamètre interne est d'environ 11 cm et dont la hauteur est de l'ordre de 15 cm. Il est lui-même constitué d'un matériau léger, par exemple identique au matériau constitutif du profilé 30.

La plate-forme 3 est maintenue à l'extrémité inférieure du ballon 2 par deux brides 21, 22 (figure 1), chaque bride étant fixée à une extrémité du profilé 30 et, d'autre part, à un point d'attache 23, 24 localisé en partie inférieure du ballon 2. Un cordon de maintien 25 relie par ailleurs lesdits points d'attaches 23, 24. Ce cordon 25 traverse les parois du logement 31.

Ainsi, la plate-forme 3 est solidement attachée au ballon 2 par des moyens 20, 21, 22 et 25 qui présentent une certaine élasticité et qui, par suite, sont aptes à absorber les vibrations et/ou les oscillations auxquelles est soumis le ballon 2.

Le dispositif de prise d'images 4 est plus particulièrement montré à la figure 3. Ce dispositif comporte un châssis 40 en double-U, un appareil de prise de vues 41, des moyens de déclenchement 42 dudit appareil, des moyens moteurs 43 du châssis et des moyens de transmission 44 de l'information.

Le châssis 40 comporte une première 401 et une seconde 402 parties en U réalisées en bois ou dans l'un des matériaux précités de la plate-forme. La seconde partie 402 en U est inversée de sorte que le châssis 40 définit un cadre dans lequel est inclus l'appareil de prise de vues 41. Elle est reliée à la plate-forme 3 uniquement par une tige de nylon 405 flexible et montrant une élasticité suffisante pour absorber toutes les vibrations/oscillations susceptibles d'être appliquées à la plate-forme 3. Cette tige 405 traverse l'ouverture oblongue de la plate-forme 3. Elle permet en outre de compenser une éventuelle inclinaison de l'aérostat 1 due au vent de sorte que le dispositif reste horizontal, même en présence d'un vent de 20 km/h.

En pratique, l'appareil 41, généralement un appareil photographique, est positionné sur la première partie 401 en U, qui constitue une gondole. Il se compose d'un boîtier 410 muni d'un objectif 411 et d'un bouton déclencheur 412.

Les moyens de déclenchement 42 sont formés d'un bras articulé 420 positionné sur la première partie en U 401 et actionné par une tige métallique 421 dont les mouvements verticaux sont contrôlés par un moteur 422.

La gondole 401 est mobile en rotation autour d'un axe 403 sensiblement horizontal, traversant les côtés montants des parties en U. La seconde partie en U 402 est par ailleurs mobile en rotation autour d'un axe 404 sensiblement vertical.

Les moyens moteurs 43 du châssis comprennent un premier moteur 430 contrôlé en partie par un gyroscope et alimenté par une batterie 431. Ce moteur 430 actionne un premier galet 432 monté rotatif sur la seconde partie en U. La rotation du premier galet 432 est transmise à un second galet 433 par une courroie 434 de sorte que, lorsque le moteur 430 est actionné, le dispositif de prise d'images dans son ensemble pivote dans le plan horizontal, sans à-coup, contrairement aux engrenages classiquement utilisés. Le gyroscope permet de compenser les mouvements de l'aérostat dans le plan horizontal. Par ailleurs, les moyens moteurs 43 du châssis comprennent un second moteur 435. Ce second moteur 435 est apte à faire pivoter la gondole selon l'axe de rotation 404. Il est lui-même alimenté par la batterie 431.

Les moyens de transmission 44 de l'information sont constitués par une antenne 440 d'émission/réception reliée à des circuits permettant de décoder et d'encoder les informations requises pour commander la prise de vues et les moteurs, et transmettre les images perçues par l'appareil 41.

En définitive, grâce aux moyens décrits ci-dessus, l'appareil photographique peut être positionné de manière quelconque dans le plan horizontal et incliné selon l'angle voulu pour une prise d'images.

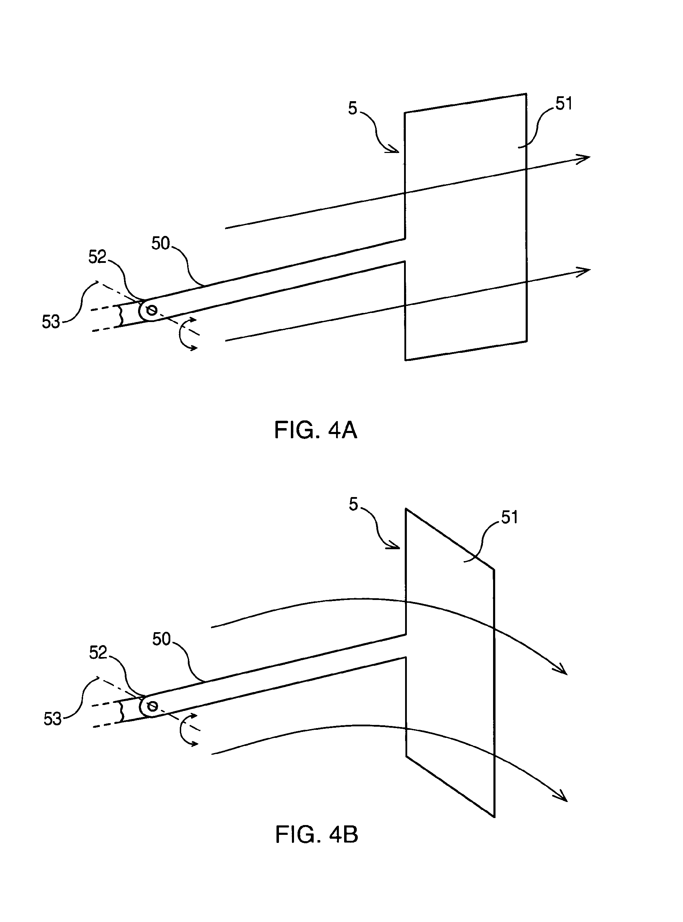

La queue 5 est plus particulièrement montrée aux figures 4A et 4B. Dans la variante de réalisation présentée à la figure 4A, la queue 5 est droite. Dans la variante de réalisation présentée à la figure 4B, elle est oblique.

Ainsi que cela apparaît à notamment à la figure 4A, la queue 5 se compose d'un bras 50 et d'un plan aérodynamique vertical 51 fixé à l'extrémité distale dudit bras. Le bras 50, tout comme le plan 51, sont constitués d'un matériau léger du type des matériaux précités. La longueur du bras 50 est de l'ordre de 80 cm, tandis que la hauteur et la largeur du plan 51 sont respectivement de l'ordre de 70 cm et de 30 cm. L'extrémité proximale du bras 50 est fixée à la plate-forme 3, ainsi que cela est montré à la figure 2. Elle comporte une articulation 52, qui présente un axe de rotation 53.

A noter que, selon un mode de réalisation avantageux selon l'invention, la queue est motorisée au moyen d'un servomoteur de faible poids (9 grammes) de sorte que le plan 51 peut être déplacé en rotation selon un axe vertical par exemple selon des angles compris entre -45 et +45°. Il n'est alors plus nécessaire d'avoir deux queues interchangeables.

Lorsque l'aérostat est élevé en altitude, et lorsque le vent souffle, même faiblement, l'aérostat se positionne naturellement la queue en arrière du ballon, le plan 51 dans la direction du vent, et se stabilise dans cette position. Il ne vrille absolument pas. Bien entendu, le vent peut ne pas être constant en direction et en force. Ces variations peuvent être à l'origine de l'application de forces, susceptibles de déstabiliser l'aérostat. Toutefois, l'articulation 52 permet d'amortir les effets du vent. En outre, ainsi que cela est illustré à la figure 2, le logement 31 de la plate-forme présente un système d'amortissement 33 fixé directement sur l'extrémité du bras de la queue. Ce système améliore encore l'amortissement des oscillations et autres forces qui s'appliquent sur la queue de l'aérostat.

L'aérostat tel que montré à la figure 1 est retenu par un unique fil de retenue 6 allant d'un treuil 7 porté par un unique opérateur 8 audit aérostat et se dédoublant, à proximité de l'aérostat. La résistance aérodynamique de ce fil de retenue est environ 5 fois inférieure à la résistance aérodynamique des amarres décrites dans le document FR-2 828 868 cité dans le préambule de la présente description. Selon la direction du vent, et la direction du sujet au sol à photographier, il est possible que le fil de retenue soit dans le champ de l'image à prendre. Dans ce cas, on utilise avantageusement, selon l'invention, la queue oblique telle que montrée à la figure 4B. L'angle que fait la plaque 51 de cette queue est d'environ 45°. Aussi, grâce à cette queue, l'aéronef prendra une position à 45° de celle qu'il aurait prise avec une queue droite. De ce fait, l'aérostat peut être positionné de manière à ce que le fil de retenue ne soit plus dans le champ de la photographie.

A noter que la queue oblique peut être montée sur l'aérostat en sens inverse à celui montré. L'aérostat se placera alors dans une position à 45° de celle prise avec une queue droite, mais dans le sens opposé à celui indiqué à la figure 4B.

A noter par ailleurs que la queue motorisée selon le mode avantageux de l'invention décrit plus haut permet d'obtenir des résultats identiques sans qu'il soit nécessaire de descendre l'aérostat et de changer la queue, ladite queue motorisée étant contrôlée du sol par l'opérateur.

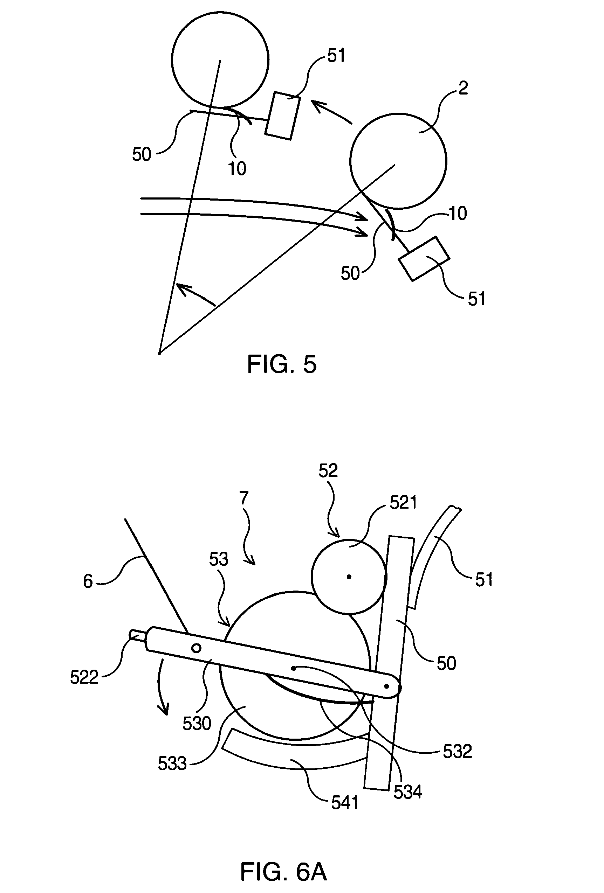

Une aile additionnelle 10 peut être fixée sur le bras 50. Grâce à cette aile additionnelle, l'aérostat 1 est stabilisé en altitude par vent fort. Le mécanisme de stabilisation est illustré à la figure 5. Ainsi que cela est montré dans cette figure, l'aile 10 oppose une résistance au vent. Aussi, par vent fort, l'aile ramène l'aérostat à la verticale.

L'aérostat décrit ci-dessus, muni de l'appareil photographique, pèse moins de 2 kg, ce qui est extrêmement peu. La poussée brute due au volume d'hélium présent dans le ballon d'1 m 75 de diamètre est de 2,8 kg. Considérant le poids précité de 2 kg, la poussée nette qui s'applique à l'aérostat est d'environ 0,80 kg. A noter cependant que, l'enveloppe du ballon étant relativement élastique, il est possible de le gonfler de manière à ce que son diamètre atteigne 2 m voir plus de 2 m. La poussée nette sera alors augmentée (le volume du ballon étant supérieur).

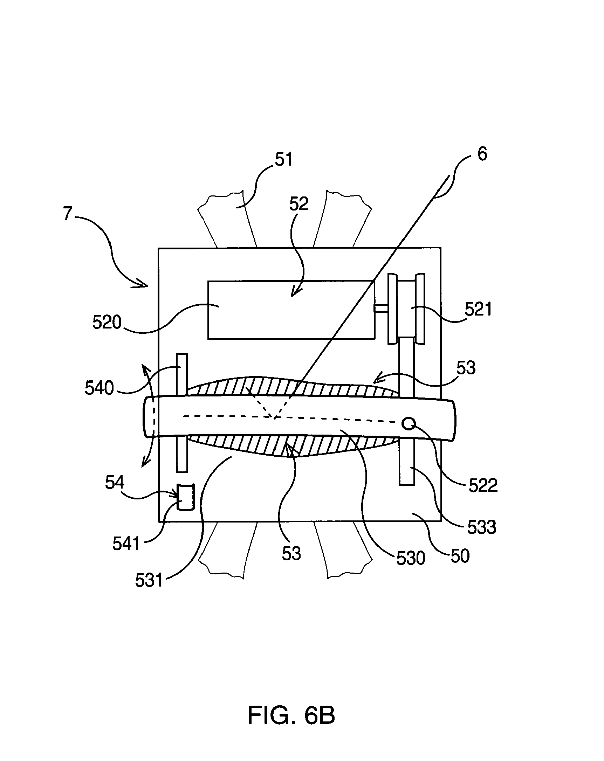

Ainsi que cela est plus particulièrement illustré aux figures 6A et 6B, le treuil 7 comporte un support 50 muni de sangles 51 formant un harnais et sur lequel support sont fixés des moyens moteurs 52, des moyens mobiles d'enroulement 53 et des moyens formant frein 54.

Le support 50 est une planche de bois ou de plastique. Les extrémités des sangles 51 sont fixées en face arrière de ce support. Elles permettent à l'opérateur 8 de porter le treuil 7 sur son abdomen, tout en ayant les mains libres.

Les moyens moteurs 52 sont formés d'un moteur 520 et d'un galet à gorge 521 solidaire dudit moteur. Un interrupteur 522 comporte la mise en marche ou l'arrêt du moteur. Ces moyens moteurs sont alimentés par une batterie de 12 V portée par l'opérateur.

Les moyens mobiles d'enroulement 53 sont formés d'une manette en U 530 fixée mobile en rotation au support 50. La bobine de fil de retenue 531 est montée rotative sur un axe 532 entre les montants de la manette 530. Une roue d'embrayage 533 est placée solidaire de cette bobine, à l'une de ces extrémités. Cette roue d'embrayage vient se loger dans la gorge du galet 521.

Les moyens formant frein 54 sont formés d'une roue 540 et d'une butée 541 en arc de cercle qui lui est complémentaire. La roue 540 est montée à une extrémité de la bobine et la butée est solidaire du support.

Lorsque l'opérateur souhaite que l'aérostat s'élève, il applique une pression sur la manette de manière à déplacer celle-ci vers le bas. La roue d'embrayage se dégage de la gorge de sorte que la bobine est libre en rotation. L'aérostat n'est alors plus retenu et s'élève naturellement, sans aucun effort de l'opérateur.

Lorsque l'opérateur considère que l'aérostat a atteint l'altitude voulue, il applique une pression encore plus forte sur la manette de sorte que la roue 540 vienne au contact de la butée 541. La butée vient alors freiner la rotation de la roue et par suite le déroulement de la bobine jusqu'à l'arrêt total.

Lorsque l'opérateur souhaite une descente de l'aérostat, il lâche la manette de manière à ce que la roue 533 vienne de nouveau se loger dans la gorge du galet 521, grâce à un ressort à lame 534. Il actionne alors l'interrupteur pour mettre en marche le moteur. Le galet vient alors entraîner la roue en rotation et le fil de retenue s'enroule, toujours sans aucun effort de l'opérateur.

Lorsque, à une altitude donnée, l'opérateur souhaite prendre une image, il saisit alors une télécommande 9 retenue, par exemple, par une sangle, à son cou. Une telle télécommande est notamment du type de celles utilisées pour le contrôle à distance d'engins télécommandés. Elle possède des manettes de commande et un écran de contrôle. Elle est alimentée par une batterie et est reliée à une antenne d'émission/réception placée au dos de l'opérateur.

Les montées et descentes de l'aérostat sont précises et rapides. En moins d'une minute, l'aérostat peut être élevé à une altitude de 150 m, bien qu'il soit possible de porter l'aérostat à une altitude plus élevée. La rapidité des reportages est augmentée, ainsi que leur mise en oeuvre.

Grâce à la télécommande, l'opérateur envoie des instructions de contrôle directement à l'antenne 440 et actionne les moteurs contrôlant la rotation du dispositif 4 autour des axes 404 et 403. Il est ainsi possible d'orienter l'appareil photographique dans la position souhaitée pour la prise de vue. Si une bride ou le fil de retenue est présent dans le champ de vue, l'opérateur peut, s'il possède une queue motorisée, changer l'orientation du plan de la queue de manière à orienter l'aérostat de manière différente, par exemple à 45° de la position initiale, de manière à ce que ledit fil de retenue ne soit plus dans le champ de vue.

En outre, l'écran de la télécommande présente à l'opérateur l'image reçue par l'appareil photographique. L'opérateur peut donc choisir la photo et déclencher la prise d'image au moment voulu en actionnant à distance déclencheur 412 en contrôlant, à distance, les moyens de déclenchement 42.

En définitive, le système selon l'invention peut entièrement être contenu (ballon gonflé) dans une remorque de dimensions réduites de l'ordre de 2 m de long. Ainsi, il est possible de conduire le système dans des sites aujourd'hui inaccessibles et il n'y a aucune restriction d'accès, petites routes ou impasses. Une fois sur le site, l'opérateur se déplace sans effort avec le ballon. Ses mains sont libres. Il peut se déplacer, même au milieu d'une foule, ce qui est indispensable pour les reportages évènementiels.

De surcroît, le système permet des prises de vues parfaites. Les photos sont nettes, même lorsque la vitesse du vent atteint 20 km/h. Une telle stabilité autorise l'utilisation de zooms de 150 mm pour l'appareil photographique. Un aérostat sans queue du type de l'état de la technique permet d'obtenir environ 2 photographies cadrées sur 10 alors qu'un aérostat selon l'invention permet d'obtenir environ 9 photographies cadrées sur 10.

Bien entendu, l'invention n'est pas limitée aux modes de réalisation de systèmes pour la prise d'images aériennes décrits ci-dessus. L'invention doit en effet se comprendre dans un cadre large comprenant d'autres modes de réalisation à la portée de l'homme du métier.

## Revendications

1. Système pour la prise d'images aériennes comprenant un aérostat (1) captif formé d'un ballon (2) sensiblement sphérique et comportant un dispositif (4) de prise d'images télécommandé à distance par un opérateur (8) au sol et un treuil (7) portatif pour l'enroulement et le déroulement d'un fil de retenue (6) de l'aérostat, ledit treuil (7) étant destiné à être porté par ledit opérateur, **caractérisé en ce que** ledit aérostat (1) comporte en outre une queue (5) apte à maintenir l'aérostat (1) sensiblement dans une direction donnée par rapport à la direction du vent.

2. Système selon la revendication 1, **caractérisé en ce que** l'aérostat (1) comporte une plate-forme (3) de portage apte à porter le dispositif (4) de prise d'image.

3. Système selon la revendication 2, **caractérisé en ce que** la plate-forme (3) de portage comporte un logement (31) pour l'embout (20) de gonflage du ballon (2).

4. Système selon l'une des revendications 1, 2 ou 3, **caractérisé en ce que** le dispositif (4) de prise d'images comprend une partie (402) mobile en rotation autour d'un axe (404) sensiblement vertical et un appareil (41) de prise d'images.

5. Système selon la revendication 4, **caractérisé en ce que** l'appareil (41) de prise d'images est porté par un support (401) mobile en rotation autour d'un axe sensiblement horizontal.

6. Système selon l'une des revendications précédentes, **caractérisé en ce que** la queue (5) est reliée à la plate-forme (3) de portage par un élément de liaison.

7. Système selon la revendication 6, **caractérisé en ce que** l'élément de liaison est mobile en rotation autour d'un axe (53) sensiblement horizontal.

8. Système selon l'une des revendications précédentes, **caractérisé en ce que** la queue (5) est une queue droite ou une queue oblique ou une queue motorisée.

9. Système selon l'une des revendications précédentes, **caractérisé en ce que** le treuil (7) comporte un support (50) muni de sangles (51) sur lequel support sont fixés des moyens moteurs (52), des moyens mobiles d'enroulement (53) et des moyens (54) formant frein.

10. Système selon l'une des revendications précédentes, **caractérisé en ce** l'aérostat (1) est retenu par un unique fil de retenue (6) allant du treuil (7) porté par l'opérateur (8) audit aérostat (1) et se dédoublant, à proximité de l'aérostat.
